# EUROPEAN PATENT APPLICATION

(11) **EP 4 600 791 A1**
(43) Date of publication of application: **13.08.2025**
(21) Application number: 23888967.9
(22) Date of filing: 18.10.2023
(51) Int. Cl.: G06F 3/041, G06F 1/16, G06F 3/046, H04W 4/80

(54) **WEARABLE DEVICE AND METHOD FOR IDENTIFYING TOUCH INPUT, AND NON-TRANSITORY COMPUTER-READABLE STORAGE MEDIUM**

(30) Priority: 09.11.2022 KR 20220148899; 21.11.2022 KR 20220156593
(71) Applicant: Samsung Electronics Co., Ltd., Suwon-si, Gyeonggi-do 16677 (KR)
(72) Inventor: CHO, Eunsung, Suwon-si Gyeonggi-do 16677 (KR); YUN, Sujin, Suwon-si Gyeonggi-do 16677 (KR); PARK, Hearan, Suwon-si Gyeonggi-do 16677 (KR)
(74) Representative: Gulde & Partner
(86) International application number: PCT/KR2023/016109
(87) International publication number: WO 2024/101704

(57) **Abstract**

A control circuit of this wearable device can be configured to: acquire information indicating the position of the wearable device through at least one sensor of the wearable device; identify, on the basis of the information indicating the position differing from a reference position, in a region in which a touch input can be received through a touch sensor of the wearable device, a first partial region located along the periphery of the region and a second partial region surrounded by the first partial region; restrain provision, to a processor of the wearable device, in response to identification of points of contact in the first partial region through the touch sensor, of data for identifying, as a touch input, at least some points of contact in the first partial region; and provide, to the processor, in response to identification of the points of contact in the second partial region through the touch sensor, the data for identifying, as a touch input, at least some points of contact in the second partial region.

## Description

### [Technical Field]

The following descriptions relate to a wearable device, a method, and a non-transitory computer-readable storage medium for identifying a touch input.

### [Background Art]

A wearable device may be a device capable of communicating with a user while being attached to at least a portion of a user's body. For example, the wearable device may include a display panel for displaying information for communication with the user. For example, the wearable device may identify a touch input received via the display panel to communicate with the user.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A wearable device is provided. The wearable device may comprise at least one sensor. The wearable device may comprise touch circuitry including control circuitry and a touch sensor. The wearable device may comprise a display panel including an area capable of receiving a touch input via the touch sensor. The wearable device may comprise a processor. The control circuitry may be configured to obtain information indicating a posture of the wearable device via the at least one sensor. The control circuitry may be configured to, based on the information indicating the posture different from a reference posture, identify, from the area, a first partial area located along a periphery of the area and a second partial area surrounded by the first partial area. The control circuitry may be configured to, in response to identifying points of contact on the first partial area via the touch sensor, refrain from providing, to the processor, data for identifying at least a portion of the points of contact on the first partial area as a touch input. The control circuitry may be configured to, in response to identifying points of contact on the second partial area via the touch sensor, provide, to the processor, data for identifying at least a portion of the points of contact on the second partial area as a touch input.

A method is provided. The method may be executed in a wearable device comprising at least one sensor, touch circuitry including control circuitry and a touch sensor, a display panel including an area capable of receiving a touch input via the touch sensor, and a processor. The method may comprise obtaining, by the control circuitry, information indicating a posture of the wearable device via the at least one sensor. The method may comprise, based on the information indicating the posture different from a reference posture, identifying, by the control circuitry, from the area, a first partial area located along a periphery of the area and a second partial area surrounded by the first partial area. The method may comprise, in response to identifying points of contact on the first partial area via the touch sensor, refraining from, by the control circuitry, providing, to the processor, data for identifying at least a portion of the points of contact on the first partial area as a touch input. The method may comprise, in response to identifying points of contact on the second partial area via the touch sensor, providing, by the control circuitry, to the processor, data for identifying at least a portion of the points of contact on the second partial area as a touch input.

A non-transitory computer readable storage device is provided. The non-transitory computer readable storage device may store one or more programs. The one or more programs may comprise instructions which, when executed by control circuitry in touch circuitry of a wearable device comprising at least one sensor, the touch circuitry including a touch sensor, a display panel including an area capable of receiving a touch input via the touch sensor, and a processor, cause the wearable device to obtain information indicating a posture of the wearable device via the at least one sensor. The one or more programs may comprise instructions which, when executed by the control circuitry, cause the wearable device to, based on the information indicating the posture different from a reference posture, identify, from the area, a first partial area located along a periphery of the area and a second partial area surrounded by the first partial area. The one or more programs may comprise instructions which, when executed by the control circuitry, cause the wearable device to, in response to identifying points of contact on the first partial area via the touch sensor, refrain from providing, to the processor, data for identifying at least a portion of the points of contact on the first partial area as a touch input. The one or more programs may comprise instructions which, when executed by the control circuitry, cause the wearable device to, in response to identifying points of contact on the second partial area via the touch sensor, provide, to the processor, data for identifying at least a portion of the points of contact on the second partial area as a touch input.

### [Description of the Drawings]

FIG. 1 illustrates an example of an unintended touch input.
FIG. 2 is a simplified block diagram of an exemplary wearable device.
FIG. 3 is a flowchart illustrating an exemplary method of identifying a touch input via partial areas adaptively identified based on a posture of a wearable device.
FIG. 4 illustrates an example of partial areas adaptively identified based on a posture of a wearable device.
FIG. 5 illustrates an exemplary method of identifying a touch input further based on whether a wearable device is worn.
FIG. 6 illustrates an exemplary method of identifying a touch input further based on a state of an electronic device.
FIG. 7 illustrates an example of a state of an electronic device corresponding to a reference state.
FIG. 8 illustrates an exemplary method of providing information from a processor to control circuitry based on a state of an electronic device.
FIG. 9 is a block diagram of an electronic device in a network environment according to various embodiments.
FIG. 10 is a block diagram of a display module according to various embodiments.

### [Mode for Invention]

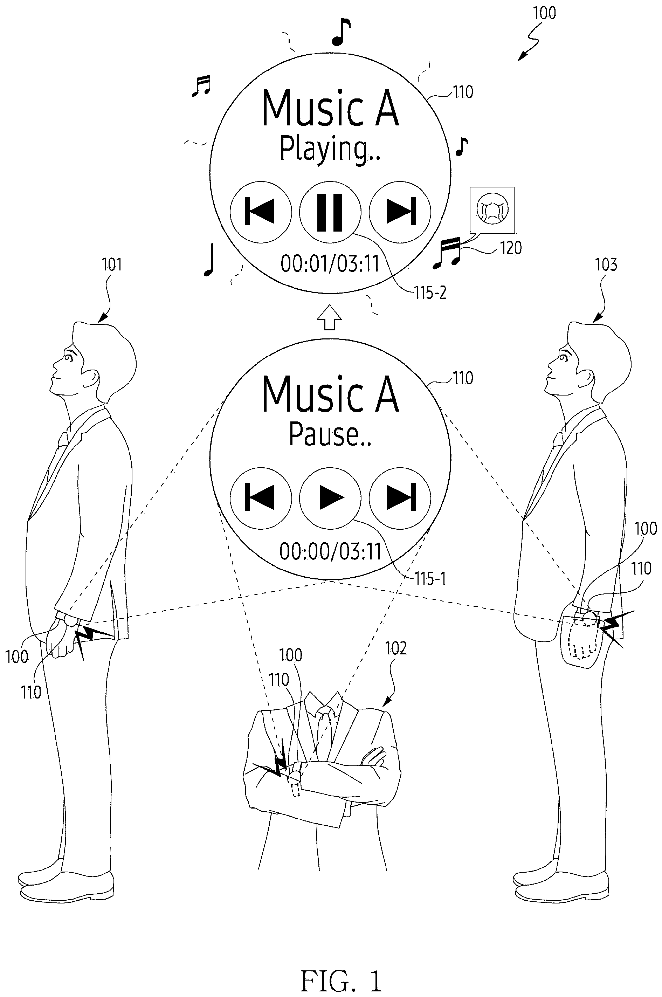

FIG. 1 illustrates an example of an unintended touch input.

Referring to FIG. 1, a wearable device 100 may be worn by a user or attached to a part of a body of the user, such as in a state 101, a state 102, and a state 103. For example, the wearable device 100 may include a display panel 110. For example, the display panel 110 may include an area capable of receiving a touch input.

For example, the wearable device 100 worn by a user may identify or recognize a touch input, in response to an external object on the area. For example, the wearable device 100 may provide feedback and/or response, in response to identification or recognition of the touch input. For example, when the external object in contact with the area is an input means (e.g., the user's finger or stylus), providing the feedback or the response based on the external object may be performing an intended operation with respect to the user. As a non-limiting example, when the external object in contact with the area is not an input means, providing the feedback or the response based on the external object may be performing an unintended action for the user.

For example, as in the state 101, the wearable device 100 worn by the user may identify a sleeve of a shirt in contact with an executable object 115-1 within the area. As a non-limiting example, based on identifying or recognizing the identification as a touch input to the executable object 115-1, by the wearable device 100, changing the executable object 115-1 into an executable object 115-2 and outputting acoustic signals through a speaker of the wearable device 100 or a speaker of an electronic device (not illustrated in FIG. 1) connected to the wearable device 100 may be executing an unintended action for the user.

For example, as in the state 102, the wearable device 100 worn by the user may identify a portion of a T-shirt in contact with the executable object 115-1 within the area. As a non-limiting example, based on identifying or recognizing the identification as a touch input to the executable object 115-1, by the wearable device 100, changing the executable object 115-1 into an executable object 115-2 and outputting acoustic signals through a speaker of the wearable device 100 or a speaker of an electronic device (not illustrated in FIG. 1) connected to the wearable device 100 may be executing an unintended action for the user.

For example, as in state 103, the wearable device 100 worn by the user may identify an inner surface of pants pocket in contact with the executable object 115-1 within the area. As a non-limiting example, based on identifying or recognizing the identification as a touch input to the executable object 115-1, by the wearable device 100, changing the executable object 115-1 into an executable object 115-2 and outputting acoustic signals through a speaker of the wearable device 100 or a speaker of an electronic device (not illustrated in FIG. 1) connected to the wearable device 100 may be executing an unintended action for the user.

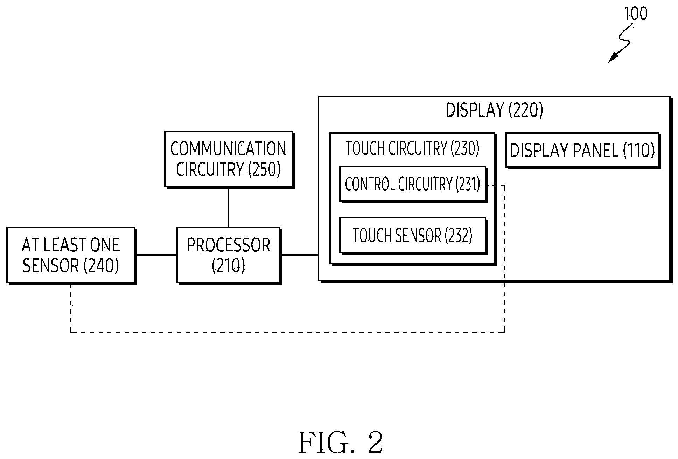

As exemplified below, the wearable device 100 may include components to reduce an execution of an unintended action. The components may be exemplified through FIG. 2.

FIG. 2 is a simplified block diagram of an exemplary wearable device.

Referring to FIG. 2, the wearable device 100 may include a processor 210, a display 220, at least one sensor 240, and communication circuitry 250.

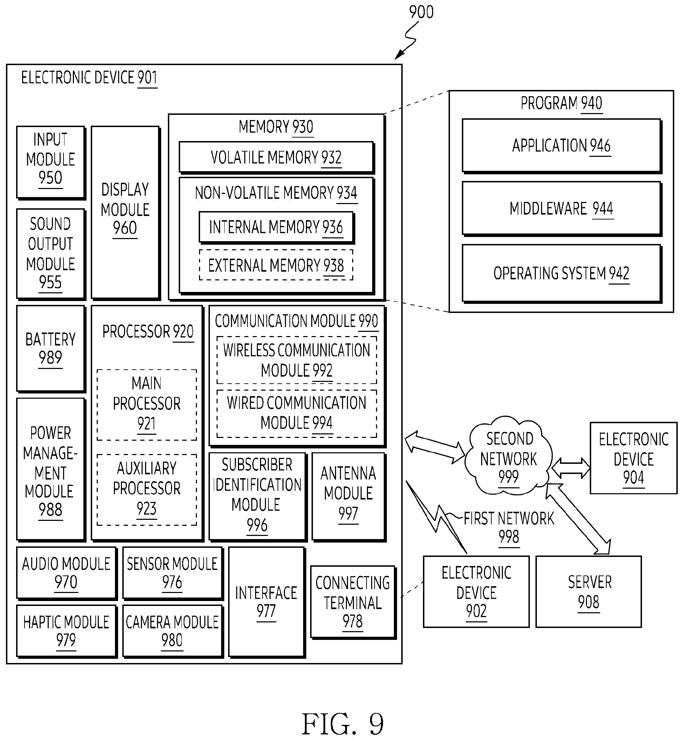

For example, the processor 210 may include at least a portion of a processor 920 of FIG. 9.

For example, the display 220 may include a display panel 110 and touch circuitry 230 including control circuitry 231 and a touch sensor 232. For example, the display panel 110 may be used to display information, a screen, and/or an image. For example, the touch circuitry 230 may be used to identify or obtain data on points of contact on at least a portion of an area of the display panel 110. In this document, the points of contact may be caused by an external object located within a certain distance (or a predetermined distance) from the at least a portion of the area as well as an external object directly in contact with the at least a portion of the area. For example, the points of contact may be caused by an external object located on the at least a portion of the area or located above (or over) the at least a portion of the area. However, it is not limited thereto. For example, the control circuitry 231 may be used to control the touch sensor 232. For example, the control circuitry 231 may be used to identify or obtain the data. For example, the control circuitry 231 may be used to provide the data to the processor 210. For example, the touch sensor 232 may be arranged with respect to the display panel 110. For example, the touch sensor 232 may be located within the area.

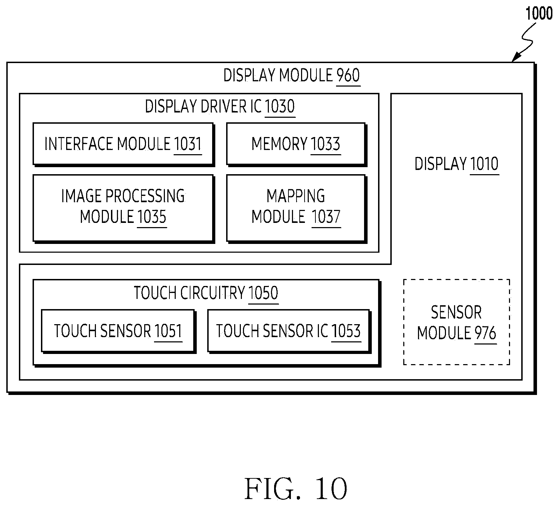

For example, the display 220 may include at least a portion of the display module 960 of FIGS. 9 and 10. For example, the display panel 110 may include at least a portion of the display 210 of FIG. 10. For example, the touch circuitry 230 may include at least a portion of the touch circuitry 1050 of FIG. 10. For example, the control circuitry 231 may include at least a portion of the touch sensor integrated circuit (IC) 1053 of FIG. 10. For example, the touch sensor 232 may include at least a portion of the touch sensor 1051 of FIG. 10.

For example, the at least one sensor 240 may be used to identify a posture of the wearable device 100. For example, the at least one sensor 240 may include an acceleration sensor and/or a gyro sensor. For example, the at least one sensor 240 may include at least a portion of the sensor module 976 of FIG. 9.

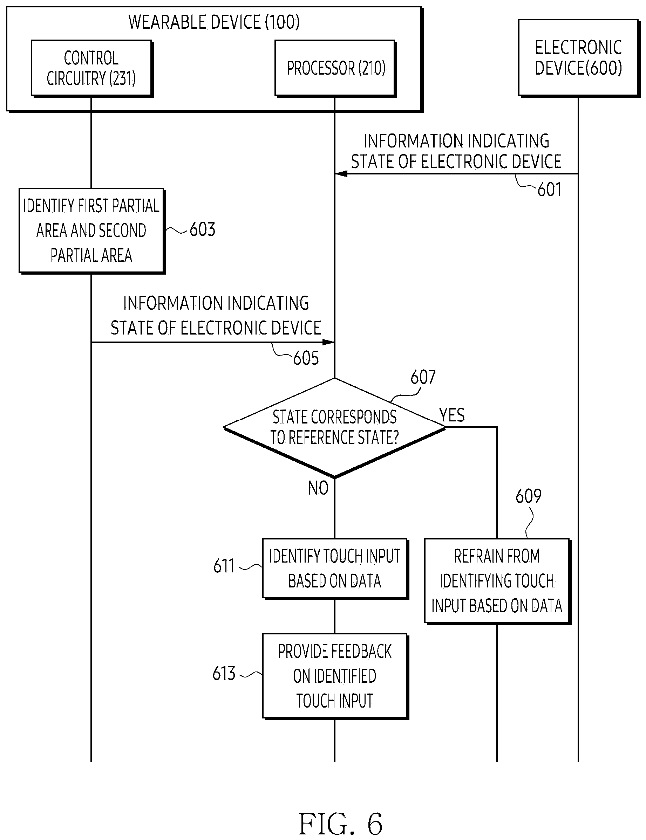

For example, the communication circuitry 250 may be used for communication between the wearable device 100 and another electronic device (e.g., the electronic device 600 of FIG. 6). For example, the communication circuitry 250 may include at least a portion of the communication module 990 of FIG. 9.

For example, the control circuitry 231 and/or the processor 210 may execute operations to reduce unintended operations performed with respect to the user based on points of contact caused by an external object distinct from an input means. The operations may be exemplified below.

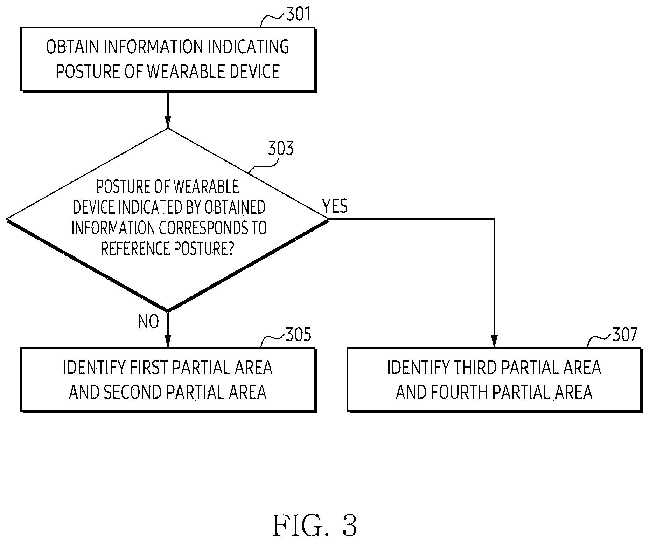

FIG. 3 is a flowchart illustrating an exemplary method of identifying a touch input via partial areas adaptively identified based on a posture of a wearable device. This method may be executed by the control circuitry 231 of FIG. 2.

Referring to FIG. 3, in operation 301, the control circuitry 231 may obtain information indicating a posture of the wearable device 100 via the at least one sensor 240. For example, the control circuitry 231 may directly obtain the information via the at least one sensor 240. For example, the control circuitry 231 may obtain the information from the at least one sensor 240 via the processor 210. However, it is not limited thereto.

For example, the information may be obtained through the acceleration sensor in the at least one sensor 240 while the wearable device 100 is in a static state. For example, the information may be obtained through the acceleration sensor and the gyro sensor in the at least one sensor 240 while the wearable device 100 is moving. For example, the information may be obtained through an image sensor in the at least one sensor 240. For example, the information obtained through the image sensor may be an image. For example, the image sensor may be disabled in response to obtaining the image. For example, the disabled image sensor may be enabled based on a predetermined period or a predetermined event. The enabled image sensor may be disabled again after obtaining the image again. However, it is not limited thereto.

As a non-limiting example, the information may indicate the posture by indicating an orientation or an inclination of the wearable device 100. As a non-limiting example, the information may indicate a direction in which the display panel 110 faces. As a non-limiting example, the information may indicate a change in the direction in which the display panel 110 faces.

In operation 303, the control circuitry 231 may identify whether the posture of the wearable device 100 indicated by the obtained information corresponds to a reference posture.

For example, the reference posture may indicate a posture of the wearable device 100 used by a user. For example, the reference posture may indicate a posture of the wearable device 100 in which the display panel 110 faces the user's face (or eyes). For example, the reference posture may indicate a posture of the wearable device 100 in which an angle between the direction in which the display panel 110 faces and an angle between a reference direction (e.g., a direction of gravity) is within a predetermined range. However, it is not limited thereto.

For example, the control circuitry 231 may execute operation 305 based on the information indicating the posture of the wearable device 100 different from the reference posture. For example, the control circuitry 231 may execute operation 307 based on the information indicating the posture of the wearable device 100 corresponding to the reference posture.

For example, when the information is an image obtained through the image sensor, the processor 210 may identify whether a visual object corresponding to a face (or eye) of a user is included in the image, and provide, to the control circuitry 231, a signal indicating that the visual object is included in the image or a signal indicating that the visual object is not included in the image. For example, the control circuitry 231 may identify that the posture corresponds to the reference posture based on the signal indicating that the visual object is included in the image, and identify that the posture is different from the reference posture based on the signal indicating that the visual object is not included in the image.

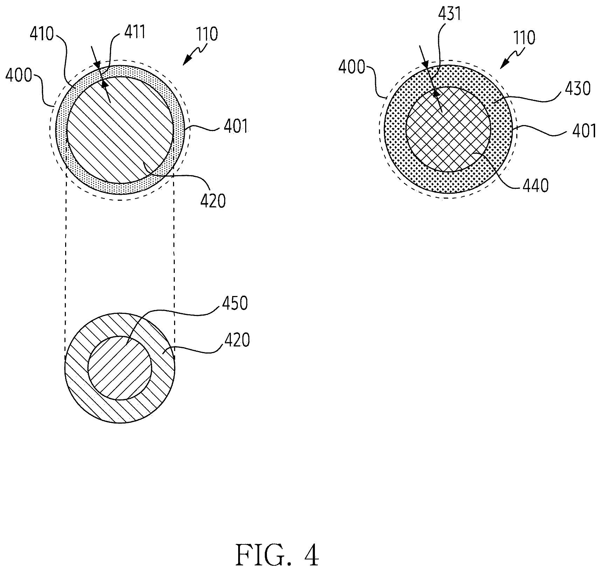

In operation 305, the control circuitry 231 may identify, on a condition that the posture of the wearable device 100 indicated by the information is different from the reference posture, a first partial area and a second partial area, from the area of the display panel 110 receiving a touch input through the touch sensor 232. The first partial area and the second partial area may be exemplified through FIG. 4.

FIG. 4 illustrates an example of partial areas adaptively identified based on a posture of a wearable device.

Referring to FIG. 4, when the posture of the wearable device 100 is distinct from the reference posture, the control circuitry 231 may identify, from an area 400 of the display panel 110 capable of receiving a touch input, a first partial area 410 and a second partial area 420. For example, the first partial area 410 may be located along a periphery 401 of the area 400. For example, the second partial area 420 may be surrounded by the first partial area 410. For example, the first partial area 410 may be located around the second partial area 420.

Referring back to FIG. 3, when the posture of the wearable device 100 is different from the reference posture, since the first partial area is located along a periphery of the area, unlike the second partial area surrounded by the first partial area, a probability that an unintended external object is contacted on the first partial area may be higher than a probability that an unintended external object is contacted on the second partial area. For example, since providing feedback or response based on points of contact on the first partial area may be executing an unintended action, unlike providing feedback or response based on points of contact on the second partial area, the control circuitry 231 may differently process points of contact on the first partial area and points of contact on the second partial area.

For example, in response to points of contact on the first partial area identified by the touch sensor 232, the control circuitry 231 may refrain from, bypass, or skip providing, to the processor 210, data for identifying at least a portion of the points of contact on the first partial area as a touch input. For example, the wearable device 100 may reduce providing feedback or response with respect to a touch input identified from the at least a portion of the points of contact on the first partial area, by refraining from, bypassing or skipping providing, to the processor 210, data for identifying the at least a portion of the points of contact on the first partial area as a touch input. For example, the wearable device 100 may reduce inconvenience caused by an execution of an operation that is not intended for the user. For example, the wearable device 100 may provide enhanced usability through processing of the points of contact on the first partial area.

For example, the control circuitry 231 may provide, in response to points of contact on the second partial area identified through the touch sensor 232, to the processor 210, data for identifying at least a portion of the points of contact on the second partial area as a touch input. For example, the data may be provided to the processor 210 to request to provide feedback or response for a touch input identified from the at least a portion of the points of contact on the second partial area. For example, the data may indicate a location of the at least a portion of the points of contact on the second partial area. For example, the data may indicate a distribution of the points of contact on the second partial area. For example, the data may indicate a change in capacitance identified through the touch sensor 232 in the at least a portion of the points of contact on the second partial area. However, it is not limited thereto.

For example, since the points of contact on the second partial area may be intended, unlike the points of contact on the first partial area, the control circuitry 231 may provide, to the processor 210, the data. For example, in response to obtaining the data, the processor 210 may identify a response, feedback, or a function corresponding to the data and provide the response, the feedback, or the function.

For example, a partial area within the area, such as the second partial area, capable of receiving a touch input while the posture of the wearable device 100 is different from the reference posture, may be further divided. For example, when the posture of the wearable device 100 is different from the reference posture, the control circuitry 231 may further identify a fifth partial area from the area. The third partial area may be exemplified through FIG. 4.

Referring to FIG. 4, when the posture of the wearable device 100 is distinct from the reference posture, the control circuitry 231 may identify, from the area 400, a first partial area 410, a second partial area 420, and a fifth partial area 450. For example, the first partial area 410 may be located along a periphery 401 of the area 400. For example, the second partial area 420 may be surrounded by the first partial area 420. For example, the fifth partial area 450 may be surrounded by the second partial area 420. For example, the second partial area 420 may be located around the fifth partial area 450.

Referring back to FIG. 3, when the posture of the wearable device 100 is different from the reference posture, the control circuitry 231 may provide, to the processor 210, data for identifying at least a portion of the points of contact on the second partial area as a touch input, unlike the points of contact on the first partial area. For example, when the posture of the wearable device 100 is different from the reference posture, the control circuitry 231 may provide, to the processor 210, data for identifying at least a portion of the points of contact on the fifth partial area as a touch input, unlike the points of contact on the first partial area. For example, a touch sensitivity used to identify the at least a portion of the points of contact on the second partial area may be different from a touch sensitivity used to identify the at least a portion of the points of contact on the fifth partial area. For example, since the fifth partial area is surrounded by the second partial area, a probability that an unintended external object is contacted on the fifth partial area may be lower than a probability that an unintended external object is contacted on the second partial area. For example, the probability that an unintended external object is contacted on the fifth partial area is lower than the probability that an unintended external object is contacted on the second partial area, a touch sensitivity used to identify the at least a portion of the points of contact on the fifth partial area may be higher than a touch sensitivity used to identify the at least a portion of the points of contact on the second partial area. However, it is not limited thereto.

For example, based on the posture different from the reference posture, the control circuitry 231 may refrain from providing, to the processor 210, data for identifying at least a portion of the points of contact on the second partial area as a touch input, and refrain from providing, to the processor 210, data for identifying at least a portion of the points of contact on the fifth partial area as a touch input. For example, the control circuitry 231 may refrain from providing, to the processor 210, at least a portion of points of contact on the entire area.

Although not illustrated in FIG. 3, on a condition that the posture of the wearable device 100 is different from the reference posture, the control circuitry 231 may refrain from, bypass, or skip providing, to the processor 210, data for identifying at least a portion of points of contact on at least a portion of the area located wider than a reference area as a touch input. For example, in response to identifying points of contact located on at least a portion of the first partial area and at least a portion of the second partial area through the touch circuitry 232, the control circuitry 231 may identify that the points of contact is distributed wider than the reference area. For example, the control circuitry 231 may refrain from, bypass, or skip providing, to the processor 210, data for identifying the at least a portion of the points of contact distributed more widely than the reference area as a touch input.

As a non-limiting example, in case that a first timing for identifying a first set of points of contact located on at least a portion of the first partial area is different from a second timing for identifying a second set of points of contact located on at least a portion of the second partial area, even when the first set of the points of contact and the second set of the points of contact are located wider than the reference surface area, the control circuitry 231 may provide, to the processor 210, data for identifying at least a portion of the first set of the points of contact and at least a portion of the second set of the points of contact as a touch input. For example, on a condition that the first timing is faster than the second timing, the processor 210 may identify the data as a swipe input from a periphery area of the area to a center of the area. For example, on a condition that the first timing is slower than the second timing, the processor 210 may identify the data as a swipe input from a center area of the area to a periphery area of the area.

In operation 307, on a condition that the posture of the wearable device 100 indicated by the obtained information corresponds to the reference posture, the control circuitry 231 may identify a third partial area and a fourth partial area from the area of the display panel 110. The third partial area and the fourth partial area may be exemplified through FIG. 4.

Referring to FIG. 4, when the posture of the wearable device 100 corresponds to the reference posture, the control circuitry 231 may identify the third partial area 430 and the fourth partial area 440 from the area 400 of the display panel 110 capable of receiving a touch input. For example, the third partial area 430 may be located along a periphery 401 of the area 400. For example, the fourth partial area 440 may be surrounded by the third partial area 430. For example, the third partial area 430 may be located around the fourth partial area 440. For example, the third partial area 430 may be at least partially superimposed with the first partial area. For example, a width 431 of the third partial area 430 may be wider than a width 411 of the first partial area 410. For example, unlike the first partial area 410 incapable of receiving a touch input, since the third partial area 430 is used to receive a touch input, the width 431 may be wider than the width 411. However, it is not limited thereto. Unlike the illustration of FIG. 4, the width 431 may be narrower than or equal to the width 411. For example, when the posture is different from the reference posture, the width 411 may be wider than or equal to the width 431 to reduce identifying of an unintended touch input.

Referring back to FIG. 3, when the posture of the wearable device 100 corresponds to the reference posture, the control circuitry 231 may provide, to the processor 210, data for identifying at least a portion of points of contact on the third partial area as a touch input. For example, when the posture of the wearable device 100 corresponds to the reference posture, the control circuitry 231 may provide, to the processor 210, data for identifying at least a portion of points of contact on the fourth partial area as a touch input. A first touch sensitivity used to identify the at least a portion of the points of contact on the third partial area may be different from a second touch sensitivity used to identify the at least a portion of the points of contact on the fourth partial area. For example, when the third partial area is configured to receive a touch input that is swept or swiped along at least a portion of a periphery of the area (e.g., the periphery 401 of the area 400 of FIG. 4), the first touch sensitivity may be higher than the second touch sensitivity. However, it is not limited thereto. For example, the first touch sensitivity may be lower than or equal to the second touch sensitivity. For example, the control circuitry 231 may identify, in response to identifying the points of contact on the third partial area via the touch sensor 232, the at least a portion of the points of contact on the third partial area based on the first touch sensitivity, and provide, to the processor 210, data for identifying the at least a portion of the points of contact on the third partial area identified based on the first touch sensitivity as a touch input. For example, the control circuitry 231 may identify, in response to identifying the points of contact on the fourth partial area via the touch sensor 232, the at least a portion of the points of contact on the fourth partial area based on the second touch sensitivity, and provide, to the processor 210, data for identifying the at least a portion of the points of contact on the fourth partial area identified based on the second touch sensitivity as a touch input. For example, in response to obtaining the data from the control circuitry 231, the processor 210 may identify a response, feedback, or a function corresponding to the data and provide the response, the feedback, or the function.

For example, each of the first touch sensitivity used to identify at least a portion of points of contact on the third partial area and the second touch sensitivity used to identify at least a portion of points of contact on the fourth partial area may be at least partially different from a touch sensitivity used to identify at least a portion of points of contact on the second partial area and/or a touch sensitivity used to identify at least a portion of points of contact on the fifth partial area.

For example, the first touch sensitivity used to identify at least a portion of points of contact on the third partial area may be higher than a touch sensitivity used to identify at least a portion of points of contact on the second partial area. For example, the first touch sensitivity used to identify at least a portion of points of contact on the third partial area may be higher than or equal to a touch sensitivity used to identify at least a portion of points of contact on the fifth partial area. However, it is not limited thereto.

For example, the second touch sensitivity used to identify the at least a portion of the points of contact on the fourth partial area may be higher than or equal to a touch sensitivity used to identify the at least a portion of the points of contact on the second partial area. However, it is not limited thereto.

Although not illustrated in FIG. 3, on a condition that the posture of the wearable device 100 corresponds to the reference posture, the control circuitry 231 may refrain from, bypass, or skip providing, to the processor 210, data for identifying at least a portion of points of contact on at least a portion of the area disposed wider than the reference surface area as a touch input. For example, in response to identifying points of contact located on at least a portion of the third partial area and at least a portion of the fourth partial area via the touch circuitry 232, the control circuitry 231 may identify that the points of contact are distributed more widely than the reference surface area. For example, the control circuitry 231 may refrain from, bypass, or skip providing, to the processor 210, data for identifying the at least a portion of the points of contact distributed more widely than the reference surface area as a touch input. For example, the reference surface area used while the posture of the wearable device 100 corresponds to the reference posture may be different from a reference surface area used while the posture of the wearable device 100 is different from the reference posture. For example, the reference surface area used while the posture of the wearable device 100 corresponds to the reference posture may be wider than the reference surface area used while the posture of the wearable device 100 is different from the reference posture. For example, the reference surface area used while the posture of the wearable device 100 corresponds to the reference posture may be narrower than the reference surface area used while the posture of the wearable device 100 is different from the reference posture. However, it is not limited thereto. For example, the reference surface area used while the posture of the wearable device 100 corresponds to the reference posture may be the same as the reference surface area used while the posture of the wearable device 100 is different from the reference posture.

Operations in FIG. 3 executed by the control circuitry 231 may be executed by the processor 210.

For example, when the operations in FIG. 3 are executed by the processor 210, in response to points of contact on a portion of the area identified via the touch sensor 232, the control circuitry 231 may provide, to the processor 210, data for identifying the at least a portion of the points of contact as a touch input.

For example, in response to identifying that the at least a portion of the points of contact is located on the first partial area identified from the area by the processor 210 based on the information indicating the posture different from the reference posture, the processor 210 may identify that the points of contact are not intended. For example, the processor 210 may refrain from providing feedback or a response based on the identification. For example, in response to identifying that the at least a portion of the points of contact is located on the second partial area identified from the area by the processor 210 based on the information indicating the posture different from the reference posture, the processor 210 may identify the points of contact as a touch input. For example, the processor 210 may provide feedback or a response based on the identification.

For example, in response to identifying that the at least a portion of the points of contact is located on the third partial area identified from the area by the processor 210 based on the information indicating the posture corresponding to the reference posture, the processor 210 may identify the points of contact as a touch input based on the first touch sensitivity. For example, the processor 210 may provide feedback or a response based on the identification. For example, in response to identifying that the at least a portion of the points of contact is located on the fourth partial area identified from the area by the processor 210 based on the information indicating the posture corresponding to the reference posture, the processor 210 may identify the points of contact as a touch input based on the second touch sensitivity. For example, the processor 210 may provide feedback or a response based on the identification.

As described above, the wearable device 100 may reduce execution of an unintended function by adaptively processing points of contact on at least a portion of an area of the display panel 110 capable of receiving a touch input, according to a posture of the wearable device 100. For example, the wearable device 100 may provide enhanced usability through such adaptive processing. For example, the wearable device 100 may enhance efficiency of an operation of the wearable device 100 through such adaptive processing.

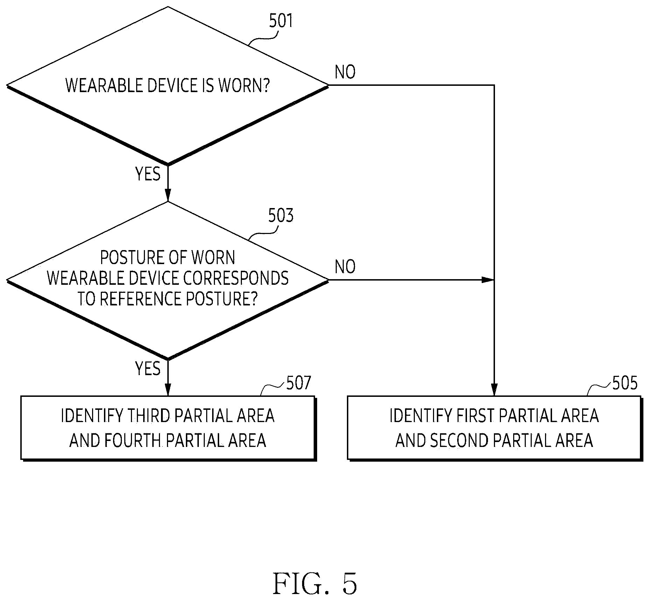

FIG. 5 illustrates an exemplary method of identifying a touch input further based on whether a wearable device is worn. This method may be executed by the control circuitry 231 of FIG. 2.

Referring to FIG. 5, in operation 501, the control circuitry 231 may identify whether the wearable device 100 is worn.

For example, the control circuitry 231 may execute the identification based on information obtained through at least one sensor 240. For example, the information may be obtained directly from the at least one sensor 240. For example, the information may be obtained from the at least one sensor 240 through the processor 210. However, it is not limited thereto.

For example, the information may indicate a direction in which the display panel 110 faces. For example, the information may indicate a change in a direction in which the display panel 110 faces. For example, the control circuitry 231 may identify that the wearable device 100 is worn, based on identifying that the change in the direction is maintained from the information. For example, the control circuitry 231 may identify that the wearable device 100 is not worn, based on identifying that the change in the direction is ceased from the information. However, it is not limited thereto.

For example, the control circuitry 231 may identify whether the wearable device 100 is worn, further based on points of contact located on at least a portion of the area of the display panel 110. For example, the control circuitry 231 may identify that the wearable device 100 is worn, based on identifying that the points of contact on the at least a portion of the area are located wider than a reference surface area and that the change in the direction is maintained. For example, the control circuitry 231 may identify that the wearable device 100 is not worn, based on identifying that the points of contact are located narrower than the reference surface area and/or that the change in the direction is ceased. However, it is not limited thereto.

For example, the control circuitry 231 may execute operation 505 based on identifying that the wearable device 100 is worn, and execute operation 503 based on identifying that the wearable device 100 is not worn.

In operation 503, the control circuitry 231 may identify whether a posture of the wearable device 100 worn by the user corresponds to a reference posture. For example, operation 503 may correspond to operation 303 of FIG. 3. The control circuitry 231 may execute operation 505 based on the posture different from the reference posture, and execute operation 507 based on the posture corresponding to the reference posture.

In operation 505, the control circuitry 231 may identify the first partial area and the second partial area from the area of the display panel 110, on a condition that the wearable device 100 is not worn. For example, the control circuitry 231 may identify the first partial area and the second partial area from the area, on a condition that a posture of the wearable device 100 worn by the user is different from the reference posture. For example, identifying the first partial area and the second partial area may correspond to operation 305 of FIG. 3.

In operation 507, the control circuitry 231 may identify the third partial area and the fourth partial area from the area, on a condition that a posture of the wearable device 1100 worn by the user corresponds to the reference posture. For example, identifying the third partial area and the fourth partial area may correspond to operation 307 of FIG. 3.

As described above, the wearable device 100 may reduce executing of an unintended function by adaptively processing points of contact on at least a portion of an area of the display panel 110 capable of receiving a touch input, further based on whether the wearable device 100 is worn. For example, the wearable device 100 may provide enhanced usability through such adaptive processing. For example, the wearable device 100 may enhance efficiency of an operation of the wearable device 100 through such adaptive processing.

FIG. 6 illustrates an exemplary method of identifying a touch input further based on a state of an electronic device. This method may be executed by the processor 210 and the control circuitry 231 of FIG. 2.

Referring to FIG. 6, in operation 601, an electronic device 600 connected to the wearable device 100 may transmit information indicating a state of the electronic device 600 to the wearable device 100. For example, the information may be transmitted to indicate whether the electronic device 600 is being used. For example, the information may indicate a posture of the electronic device 600 identified through at least one sensor of the electronic device 600. For example, the information may indicate whether the electronic device 600 is within a state for normal power consumption or a state for lower power consumption. For example, the information may indicate a type of image or screen displayed through a display panel of the electronic device 600. However, it is not limited thereto.

For example, the information may be transmitted from the electronic device 600 to the wearable device 100 based on a predetermined period while a connection between the wearable device 100 and the electronic device 600 is maintained. For example, the information may be transmitted from the electronic device 600 to the wearable device 100 in response to a change in a state of the electronic device 600.

For example, the information may be transmitted in response to a request from the wearable device 100. Although not illustrated in FIG. 6, the processor 210 of the wearable device 100 may request, through the communication circuitry 250, to transmit the information, in response to the information indicating the posture of the wearable device 100 different from the reference posture. The electronic device 600 may transmit the information to the wearable device 100, in response to the request.

The processor 210 may receive the information from the electronic device 600 through the communication circuitry 250. For example, the information may be received while the wearable device 100 is worn.

In operation 603, the control circuitry 231 may identify the first partial area and the second partial area based on identifying that the posture of the wearable device 100 is different from the reference posture. For example, even when the control circuitry 231 identifies points of contact on the first partial area, the control circuitry 231 may refrain from providing, to the processor 210, data for recognizing the at least a portion of the points of contact on the first partial area as a touch input. For example, the control circuitry 231 may execute operation 605 in response to identifying points of contact on the second partial area.

In operation 605, the control circuitry 231 may provide, to the processor 210, data for recognizing at least a portion of the points of contact on the second partial area as a touch input. For example, the processor 210 may obtain the data from the control circuitry 231.

FIG. 6 illustrates an example in which operation 605 is executed after operation 601 is executed, but this is for convenience of description. Operation 601 may be executed after operation 605 is executed, or may be executed together with operation 605.

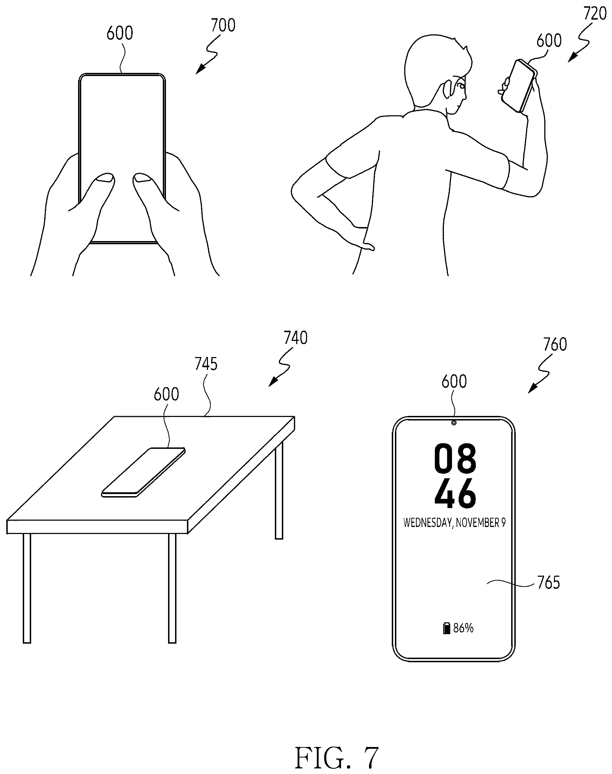

In operation 607, the processor 210 may identify whether a state of the electronic device 600, indicated by the information received in operation 601, corresponds to the reference state. For example, the reference state may indicate the use of the electronic device 600. For example, the state of the electronic device 600 corresponding to the reference state may indicate that the electronic device 600 is being used. For example, the state of the electronic device 600 different from the reference state may indicate that the electronic device 600 is not being used. The state corresponding to the reference state and the state different from the reference state may be exemplified through FIG. 7.

FIG. 7 illustrates an example of a state of an electronic device corresponding to a reference state and a state of the electronic device different from the reference state.

Referring to FIG. 7, the processor 210 may identify that the state of the electronic device 600 corresponds to the reference state, based on identifying a state in which a touch input is being received through a display panel of the electronic device 600, such as in a state 700, through the information. For example, the processor 210 may identify that the state of the electronic device 600 corresponds to the reference state, based on identifying a posture of the electronic device 600 toward a user's face (or eye) through the display panel of the electronic device 600 in an unlocked state, such as in a state 720, through the information. For example, the processor 210 may identify that the state of the electronic device 600 is different from the reference state, based on identifying a state in which the electronic device 600 is located on an external object 745, or the display panel of the electronic device 600 facing in a vertical direction, such as in a state 740, through the information. For example, the processor 210 may identify that the state of the electronic device 600 is different from the reference state, based on identifying that a screen (e.g., an always on display (AoD) screen) provided while a processor of the electronic device 600 is at least temporarily in a sleep state is displayed through the display panel of the electronic device 600, such as in a state 760, through the information. For example, the screen may be displayed while the electronic device 600 is in a state for lower power consumption. For example, although not illustrated in FIG. 7, the processor 210 may identify that the state of the electronic device 600 is different from the reference state, based on identifying that a black screen is displayed through the display panel of the electronic device 600, through the information. However, it is not limited thereto.

Referring back to FIG. 6, the processor 210 may execute operation 609 based on the state of the electronic device 600 corresponding to the reference state, and execute operation 611 based on the state of the electronic device 600 different from the reference state.

In operation 609, the processor 210 may refrain from identifying a touch input based on the data obtained in operation 605, on a condition that the state of the electronic device 600 corresponds to the reference state. For example, since points of contact on the second partial area identified through the touch sensor 232 while the electronic device 600 is being used by a user wearing the wearable device 100 may be points of contact caused contrary to the user's intention, the processor 210 may ignore the data. For example, providing feedback (or a response) based on points of contact on the first partial area and points of contact on the second partial area may be different from the reference state

In operation 611, the processor 210 may identify a touch input based on the data obtained in operation 605, on a condition that the state of the electronic device 600 is different from the reference state. For example, the processor 210 may identify the touch input based on a location of the at least a portion of the points of contact and/or a shape (or pattern) formed by the at least a portion of the points of contact.

In operation 613, the processor 210 may provide feedback on the identified touch input. As a non-limiting example, the processor 210 may provide the feedback by changing at least a portion of a screen displayed on the display panel 110 of the wearable device 100.

As described above, the wearable device 100 may reduce executing of an unintended function, by adaptively processing points of contact on at least a portion of an area of the display panel 110 capable of receiving a touch input, further based on a state of the electronic device 600 connected to the wearable device 100. For example, the wearable device 100 may provide enhanced usability through such adaptive processing. For example, the wearable device 100 may enhance efficiency of an operation of the wearable device 100 through such adaptive processing.

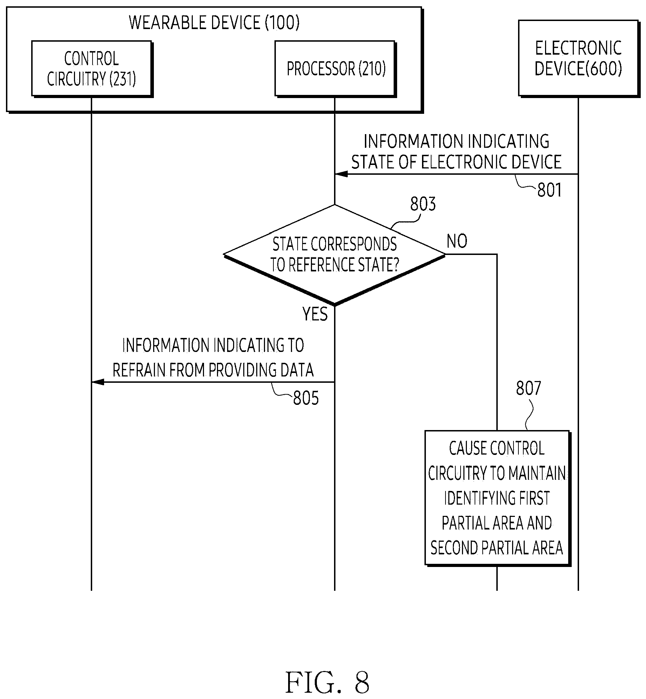

FIG. 8 illustrates an exemplary method of providing information from a processor to control circuitry based on a state of an electronic device. This method may be executed by the processor 210 and the control circuitry 231 of FIG. 2.

Referring to FIG. 8, in operation 801, the electronic device 600 connected to the wearable device 100 may transmit, to the wearable device 100, information indicating a state of the electronic device 600. For example, operation 801 may correspond to operation 601. The processor 210 may receive the information from the electronic device 600 through the communication circuitry 250. For example, the information may be received while the wearable device 100 is worn.

In operation 803, the processor 210 may identify whether the state of the electronic device 600 indicated by the information received in operation 801 corresponds to the reference state. For example, an operation of identifying whether the state corresponds to the reference state may correspond to operation 607 of FIG. 6. For example, the processor 210 may execute operation 805 based on the state different from the reference state, and execute operation 807 based on the state corresponding to the reference state.

In operation 805, on a condition that the state corresponds to the reference state, the processor 210 may provide, to the control circuitry 231, information indicating to refrain from providing, to the processor 210, data for identifying at least a portion of points of contact on at least a portion of the area of the display panel 110 capable of receiving a touch input as a touch input.

For example, in response to obtaining the information from the processor 210, the control circuitry 231 may refrain from providing, to the processor 210, data for identifying at least a portion of the points of contact on the at least a portion of the area as touch input.

For example, when the posture of the wearable device 100 is different from the reference posture, the control circuitry 231 may refrain from providing, to the processor 210, data for identifying at least a portion of points of contact on the second partial area as well as at least a portion of points of contact on the first partial area as a touch input. For example, a touch input on the first partial area and a touch input on the second partial area may be blocked or ignored based on the information.

For example, when the posture of the wearable device 100 corresponds to the reference posture, the control circuitry 231 may refrain from providing, to the processor 210, data for identifying at least a portion of points of contact on the third partial area as well as at least a portion of points of contact on the fourth partial area as a touch input. For example, a touch input on the third partial area and a touch input on the fourth partial area may be blocked or ignored based on the information.

In operation 807, the processor 210 may cause the control circuitry 231 to maintain identifying the first partial area and the second partial area, on a condition that the state is different from the reference state. For example, the processor 210 may control the control circuitry 231 to execute operations 301 to 307 or operations 501 to 507.

As described above, the wearable device 100 may reduce executing of an unintended function, by adaptively processing points of contact on at least a portion of an area of the display panel 110 capable of receiving a touch input, further based on a state of the electronic device 600 connected to the wearable device 100. For example, the wearable device 100 may provide enhanced usability through such adaptive processing. For example, the wearable device 100 may enhance efficiency of an operation of the wearable device 100 through such adaptive processing.

FIG. 9 is a block diagram illustrating an electronic device 901 in a network environment 900 according to various embodiments. Referring to FIG. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to an embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, an HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to an embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

FIG. 10 is a block diagram 1000 illustrating the display module 960 according to various embodiments. Referring to FIG. 10, the display module 960 may include a display 1010 and a display driver integrated circuit (DDI) 1030 to control the display 1010. The DDI 1030 may include an interface module 1031, memory 1033 (e.g., buffer memory), an image processing module 1035, or a mapping module 1037. The DDI 1030 may receive image information that contains image data or an image control signal corresponding to a command to control the image data from another component of the electronic device 901 via the interface module 1031. For example, according to an embodiment, the image information may be received from the processor 920 (e.g., the main processor 921 (e.g., an application processor)) or the auxiliary processor 923 (e.g., a graphics processing unit) operated independently from the function of the main processor 921. The DDI 1030 may communicate, for example, with touch circuitry 1050 or the sensor module 976 via the interface module 1031. The DDI 1030 may also store at least part of the received image information in the memory 1033, for example, on a frame by frame basis. The image processing module 1035 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1010. The mapping module 1037 may generate a voltage value or a current value corresponding to the image data pre-processed or post-processed by the image processing module 1035. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1010 may be driven, for example, based at least in part on the voltage value or the current value such that visual information (e.g., a text, an image, or an icon) corresponding to the image data may be displayed via the display 1010.

According to an embodiment, the display module 960 may further include the touch circuitry 1050. The touch circuitry 1050 may include a touch sensor 1051 and a touch sensor IC 1053 to control the touch sensor 1051. The touch sensor IC 1053 may control the touch sensor 1051 to sense a touch input or a hovering input with respect to a certain position on the display 1010. To achieve this, for example, the touch sensor 1051 may detect (e.g., measure) a change in a signal (e.g., a voltage, a quantity of light, a resistance, or a quantity of one or more electric charges) corresponding to the certain position on the display 1010. The touch circuitry 1050 may provide input information (e.g., a position, an area, a pressure, or a time) indicative of the touch input or the hovering input detected via the touch sensor 1051 to the processor 920. According to an embodiment, at least part (e.g., the touch sensor IC 1053) of the touch circuitry 1050 may be formed as part of the display 1010 or the DDI 1030, or as part of another component (e.g., the auxiliary processor 923) disposed outside the display module 960.

According to an embodiment, the display module 960 may further include at least one sensor (e.g., a fingerprint sensor, an iris sensor, a pressure sensor, or an illuminance sensor) of the sensor module 976 or a control circuit for the at least one sensor. In such a case, the at least one sensor or the control circuit for the at least one sensor may be embedded in one portion of a component (e.g., the display 1010, the DDI 1030, or the touch circuitry 1050)) of the display module 960. For example, when the sensor module 976 embedded in the display module 960 includes a biometric sensor (e.g., a fingerprint sensor), the biometric sensor may obtain biometric information (e.g., a fingerprint image) corresponding to a touch input received via a portion of the display 1010. As another example, when the sensor module 976 embedded in the display module 960 includes a pressure sensor, the pressure sensor may obtain pressure information corresponding to a touch input received via a partial or whole area of the display 1010. According to an embodiment, the touch sensor 1051 or the sensor module 976 may be disposed between pixels in a pixel layer of the display 1010, or over or under the pixel layer.

As described above, a wearable device 100 may comprise at least one sensor 240, touch circuitry 230 including control circuitry 231 and a touch sensor 232, a display panel 110 including an area capable of receiving a touch input via the touch sensor 232, and a processor 210. According to an embodiment, the control circuitry 231 may be configured to obtain information indicating a posture of the wearable device 100 via the at least one sensor 240. According to an embodiment, the control circuitry 231 may be configured to, based on the information indicating the posture different from a reference posture, identify, from the area, a first partial area located along a periphery of the area and a second partial area surrounded by the first partial area. According to an embodiment, the control circuitry 231 may be configured to, in response to identifying points of contact on the first partial area via the touch sensor 232, refrain from providing, to the processor 210, data for identifying at least a portion of the points of contact on the first partial area as a touch input. According to an embodiment, the control circuitry 231 may be configured to, in response to identifying points of contact on the second partial area via the touch sensor 232, provide, to the processor 210, data for identifying at least a portion of the points of contact on the second partial area as a touch input.

According to an embodiment, the control circuitry 231 may be configured to, based on the information indicating the posture corresponding to the reference posture, identify, from the area, a third partial area at least partially superimposed on the first partial area and a fourth partial area surrounded by the third partial area. According to an embodiment, the control circuitry 231 may be configured to, in response to identifying points of contact on the third partial area via the touch sensor 232, identify at least a portion of the points of contact on the third partial area based on a first touch sensitivity, and provide, to the processor 210, data for identifying the at least a portion of the points of contact on the third partial area as a touch input. According to an embodiment, the control circuitry 231 may be configured to, in response to identifying points of contact on the fourth partial area via the touch sensor 232, identify at least a portion of the points of contact on the fourth partial area based on a second touch sensitivity lower than the first touch sensitivity, and provide, to the processor 210, data for identifying the at least a portion of the points of contact on the fourth partial area as a touch input. According to an embodiment, a width of the first partial area may be narrower than a width of the third partial area.

According to an embodiment, the control circuitry 231 may be configured to, based on the information indicating the posture different from the reference posture, further identify, from the area, a third partial area surrounded by the second partial area. According to an embodiment, the control circuitry 231 may be configured to, in response to identifying points of contact on the third partial area via the touch sensor 232, identify at least a portion of the points of contact on the third partial area based on a touch sensitivity higher than a touch sensitivity for the second partial area. According to an embodiment, the control circuitry 231 may be configured to, provide, to the processor 210, data for identifying the at least a portion of the points of contact on the third partial area as a touch input.

According to an embodiment, the wearable device 100 may comprise communication circuitry. According to an embodiment, the processor 210 may be configured to receive information indicating a state of an electronic device 600 connected to the wearable device 100, via the communication circuitry, from the electronic device 600. According to an embodiment, the processor 210 may be configured to, in response to the information indicating the state corresponding to a reference state, refrain from identifying a touch input based on the data provided from the control circuitry 231, the reference state indicating use of the electronic device 600. According to an embodiment, the processor 210 may be configured to, in response to the information indicating the state of the electronic device 600 different from the reference state, identify a touch input based on the data provided from the control circuitry 231. According to an embodiment, in claim 6, the state corresponding to the reference state may comprise a display panel of the electronic device 600 in an unlock state pointing toward a face, and a touch input on the display panel of the electronic device 600 being identified. According to an embodiment, the state of the electronic device 600 different from the reference state may comprise the electronic device 600 being in a state for lower power consumption.

According to an embodiment, the processor 210 may be configured to, in response to the information indicating the posture different from the reference posture, request, to the electronic device 600, via the communication circuitry, to transmit the information indicating the state. According to an embodiment, the processor 210 may be configured to receive, via the communication circuitry, the information indicating the state transmitted from the electronic device 600 in response to the request.

According to an embodiment, the processor 210 may be configured to, while identifying that the wearable device 100 is worn via the at least one sensor, receive, from the electronic device 600, via the communication circuitry, the information.

According to an embodiment, the wearable device 100 may comprise communication circuitry. According to an embodiment, the processor 210 may be configured to, in response to receiving, via the communication circuitry, information indicating a state of an electronic device 600 connected to the wearable device 100 that corresponds to a reference state, provide, to the control circuitry 231, information indicating refraining from providing data for identifying at least a portion of points of contact on the second partial area as a touch input, the reference state indicating use of the electronic device 600.

As described above, a method may be executed in a wearable device 100 comprising at least one sensor, touch circuitry 230 including control circuitry 231 and a touch sensor 232, a display panel 110 including an area capable of receiving a touch input via the touch sensor 232, and a processor 210. According to an embodiment, the method may comprise obtaining, by the control circuitry 231, information indicating a posture of the wearable device 100 via the at least one sensor. According to an embodiment, the method may comprise, based on the information indicating the posture different from a reference posture, identifying, by the control circuitry 231, from the area, a first partial area located along a periphery of the area and a second partial area surrounded by the first partial area. According to an embodiment, the method may comprise, in response to identifying points of contact on the first partial area via the touch sensor 232, refraining from, by the control circuitry 231, providing, to the processor 210, data for identifying at least a portion of the points of contact on the first partial area as a touch input. According to an embodiment, the method may comprise, in response to identifying points of contact on the second partial area via the touch sensor 232, providing, by the control circuitry 231, to the processor 210, data for identifying at least a portion of the points of contact on the second partial area as a touch input.

According to an embodiment, the method may comprise, based on the information indicating the posture corresponding to the reference posture, identifying, by the control circuitry 231, from the area, a third partial area at least partially superimposed on the first partial area and a fourth partial area surrounded by the third partial area. According to an embodiment, the method may comprise, in response to identifying points of contact on the third partial area via the touch sensor 232, identifying, by the control circuitry 231, at least a portion of the points of contact on the third partial area based on a first touch sensitivity, and providing, by the control circuitry 231, to the processor 210, data for identifying the at least a portion of the points of contact on the third partial area as a touch input. According to an embodiment, the method may comprise, in response to identifying points of contact on the fourth partial area via the touch sensor 232, identifying, by the control circuitry 231, at least a portion of the points of contact on the fourth partial area based on a second touch sensitivity lower than the first touch sensitivity, and providing, by the control circuitry 231, to the processor 210, data for identifying the at least a portion of the points of contact on the fourth partial area as a touch input. According to an embodiment, a width of the first partial area may be narrower than a width of the third partial area.

According to an embodiment, the method may comprise, based on the information indicating the posture different from the reference posture, further identifying, by the control circuitry 231, from the area, a third partial area surrounded by the second partial area. According to an embodiment, the method may comprise, in response to identifying points of contact on the third partial area via the touch sensor 232, identifying, by the control circuitry 231, at least a portion of the points of contact on the third partial area based on a touch sensitivity higher than a touch sensitivity for the second partial area. According to an embodiment, the method may comprise providing, by the control circuitry 231, to the processor 210, data for identifying the at least a portion of the points of contact on the third partial area as a touch input.

According to an embodiment, the method may comprise receiving, by the processor 210, information indicating a state of an electronic device 600 connected to the wearable device 100, via communication circuitry of the wearable device 100, from the electronic device 600. According to an embodiment, the method may comprise, in response to the information indicating the state corresponding to a reference state, refraining from, by the processor 210, identifying a touch input based on the data provided from the control circuitry 231, the reference state indicating use of the electronic device 600.

According to an embodiment, the method may comprise, in response to the information indicating the state different from the reference state, identifying, by the processor 210, a touch input based on the data provided from the control circuitry 231. According to an embodiment, the state corresponding to the reference state may comprise a display panel of the electronic device 600 in an unlock state pointing toward a face, and a touch input on the display panel of the electronic device 600 being identified. According to an embodiment, the state of the electronic device 600 different from the reference state may comprise the electronic device 600 being in a state for lower power consumption.

According to an embodiment, receiving the information from the electronic device 600 may comprise, in response to the information indicating the posture different from the reference posture, requesting, by the processor 210, to the electronic device 600, via the communication circuitry, to transmit the information indicating the state. According to an embodiment, receiving the information from the electronic device 600 may comprise receiving, by the processor 210, via the communication circuitry, the information indicating the state transmitted from the electronic device 600 in response to the request.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (100) comprising:
at least one sensor (240);
touch circuitry (230) including control circuitry (231) and a touch sensor (232);
a display panel (110) including an area capable of receiving a touch input via the touch sensor (232); and
a processor (210),
wherein the control circuitry (231) is configured to:
obtain information indicating a posture of the wearable device (100) via the at least one sensor (240);
based on the information indicating the posture different from a reference posture, identify, from the area, a first partial area located along a periphery of the area and a second partial area surrounded by the first partial area;
in response to identifying points of contact on the first partial area via the touch sensor (232), refrain from providing, to the processor (210), data for identifying at least a portion of the points of contact on the first partial area as a touch input; and
in response to identifying points of contact on the second partial area via the touch sensor (232), provide, to the processor (210), data for identifying at least a portion of the points of contact on the second partial area as a touch input.

2. The wearable device (100) of claim 1, wherein the control circuitry (231) is further configured to:
based on the information indicating the posture corresponding to the reference posture, identify, from the area, a third partial area at least partially superimposed on the first partial area and a fourth partial area surrounded by the third partial area;
in response to identifying points of contact on the third partial area via the touch sensor (232):
identify at least a portion of the points of contact on the third partial area based on a first touch sensitivity, and
provide, to the processor (210), data for identifying at least the portion of the points of contact on the third partial area as a touch input; and
in response to identifying points of contact on the fourth partial area via the touch sensor (232):
identify at least a portion of the points of contact on the fourth partial area based on a second touch sensitivity lower than the first touch sensitivity, and
provide, to the processor (210), data for identifying at least the portion of the points of contact on the fourth partial area as a touch input.

3. The wearable device (100) of any one of claims 1 to 2, wherein a width of the first partial area is narrower than a width of the third partial area.

4. The wearable device (100) of any one of the preceding claims, wherein the control circuitry (231) is further configured to:
based on the information indicating the posture different from the reference posture, further identify, from the area, a third partial area surrounded by the second partial area;
in response to identifying points of contact on the third partial area via the touch sensor (232), identify at least a portion of the points of contact on the third partial area based on a touch sensitivity higher than a touch sensitivity for the second partial area; and
provide, to the processor (210), data for identifying at least the portion of the points of contact on the third partial area as a touch input.

5. The wearable device (100) of any one of the preceding claims, further comprising:
communication circuitry,
wherein the processor (210) is configured to:
receive information indicating a state of an electronic device (600) connected to the wearable device (100), via the communication circuitry, from the electronic device (600); and
in response to the information indicating the state of the electronic device (600) corresponding to a reference state, refrain from identifying a touch input based on the data provided from the control circuitry (231), the reference state indicating use of the electronic device (600).

6. The wearable device (100) of any one of the preceding claims, wherein the processor (210) is further configured to:
in response to the information indicating the state of the electronic device (600) different from the reference state, identify a touch input based on the data provided from the control circuitry (231).

7. The wearable device (100) of any one of the preceding claims, wherein the state of the electronic device (600) corresponding to the reference state comprises:
a display panel of the electronic device (600) in an unlock state pointing a face, and
a touch input on the display panel of the electronic device (600) being identified.

8. The wearable device (100) of any one of the preceding claims, wherein the state of the electronic device (600) different from the reference state comprises the electronic device (600) being in a state for lower power consumption.

9. The wearable device (100) of any one of the preceding claims, wherein the processor (210) is configured to:
in response to the information indicating the posture different from the reference posture, request, to the electronic device (600), via the communication circuitry, to transmit the information indicating the state of the electronic device (600); and
receive, via the communication circuitry, the information indicating the state of the electronic device (600) transmitted from the electronic device (600) in response to the request.

10. The wearable device (100) of any one of the preceding claims, wherein the processor (210) is configured to:
while identifying that the wearable device (100) is worn via the at least one sensor, receive, from the electronic device (600), via the communication circuitry, the information.

11. The wearable device (100) of any one of the preceding claims, further comprising:
communication circuitry,
wherein the processor (210) is configured to:
in response to receiving, via the communication circuitry, information indicating a state of an electronic device (600) connected to the wearable device (100) that corresponds to a reference state, provide, to the control circuitry (231), information indicating refraining from providing data for identifying at least a portion of points of contact on the second partial area as a touch input, the reference state indicating use of the electronic device (600).

12. A method executed in a wearable device (100) comprising at least one sensor (240), touch circuitry (230) including control circuitry (231) and a touch sensor (232), a display panel (110) including an area capable of receiving a touch input via the touch sensor (232), and a processor (210), the method comprising
obtaining, by the control circuitry (231), information indicating a posture of the wearable device (100) via the at least one sensor (240);
based on the information indicating the posture different from a reference posture, identifying, by the control circuitry (231), from the area, a first partial area located along a periphery of the area and a second partial area surrounded by the first partial area;
in response to identifying points of contact on the first partial area via the touch sensor (232), refraining from, by the control circuitry (231), providing, to the processor (210), data for identifying at least a portion of the points of contact on the first partial area as a touch input; and
in response to identifying points of contact on the second partial area via the touch sensor (232), providing, by the control circuitry (231), to the processor (210), data for identifying at least a portion of the points of contact on the second partial area as a touch input.

13. The method of claim 12, further comprising:
based on the information indicating the posture corresponding to the reference posture, identifying, by the control circuitry (231), from the area, a third partial area at least partially superimposed on the first partial area and a fourth partial area surrounded by the third partial area;
in response to identifying points of contact on the third partial area via the touch sensor (232):
identifying, by the control circuitry (231), at least a portion of the points of contact on the third partial area based on a first touch sensitivity, and
providing, by the control circuitry (231), to the processor (210), data for identifying at least the portion of the points of contact on the third partial area as a touch input; and
in response to identifying points of contact on the fourth partial area via the touch sensor (232):
identifying, by the control circuitry (231), at least a portion of the points of contact on the fourth partial area based on a second touch sensitivity lower than the first touch sensitivity, and
providing, by the control circuitry (231), to the processor (210), data for identifying at least the portion of the points of contact on the fourth partial area as a touch input.

14. The method of any one of claims 12 to 13, wherein a width of the first partial area is narrower than a width of the third partial area.

15. The method of any one of claims 12 to 14, further comprising:
based on the information indicating the posture different from the reference posture, further identifying, by the control circuitry (231), from the area, a third partial area surrounded by the second partial area;
in response to identifying points of contact on the third partial area via the touch sensor (232), identifying, by the control circuitry (231), at least a portion of the points of contact on the third partial area based on a touch sensitivity higher than a touch sensitivity for the second partial area; and
providing, by the control circuitry (231), to the processor (210), data for identifying at least the portion of the points of contact on the third partial area as a touch input.
